# EUROPEAN PATENT SPECIFICATION

(11) **EP 1 448 716 B1**
(45) Date of publication and mention of the grant of the patent: **22.06.2011**
(21) Application number: 02770317.2
(22) Date of filing: 25.10.2002
(51) Int. Cl.: C08L 101/02, C08K 5/3412, C08G 81/00

(54) **NEW POLYMER COMPOSITIONS, THE PREPARATION AND USE THEREOF AS WELL AS SHAPED PARTS AND THE PREPARATION THEREOF**
NEUE POLYMERZUSAMMENSETZUNGEN, DEREN HERSTELLUNG UND VERWENDUNG SOWIE FORMTEILE UND DEREN HERSTELLUNG
NOUVELLES COMPOSITIONS POLYMERES, LEUR PREPARATION ET LEUR UTILISATION ; PARTIES FORMEES ET LEUR PREPARATION

(30) Priority: 26.10.2001 NL 1019241
(43) Date of publication of application: 25.08.2004
(73) Proprietor: DSM IP Assets B.V., 6411 TE Heerlen (NL)
(72) Inventor: LOONTJENS, Jacobus, Antonius, NL-6231 KK Meerssen (NL); SCHOLTENS, Boudewijn, Jan, Robert, NL-6151 JA Munstergeleen (NL)
(74) Representative: Dorrestijn, Antoon
(86) International application number: PCT/NL2002/000681
(87) International publication number: WO 2003/035767

(56) References cited:
- EP-A- 1 132 411
- WO-A-01/66633
- US-A1- 2001 016 630

## Description

The invention relates to new polymer compositions, a process for the preparation of these compositions, as well as the use of these compositions, for instance for improvement of the impact resistance or the adhesion.

More in particular the invention relates to polymer compositions of two or more essentially incompatible polymers, which contain functional hydroxy groups (-OH) or functional amino groups (-NH₂), and further a process for the preparation of shaped parts. The invention further relates to shaped parts containing at least two parts that are in contact with each other via a boundary face and with each of these parts containing a different polymer, these polymers being essentially incompatible polymers and containing functional hydroxy groups or functional amino groups. More in particular it relates to shaped parts in the form of laminates or sheathed monofilaments, for instance obtained by means of coextrusion, or injection moulding products.

Polymer compositions that are used as construction material generally have the highest possible stiffness, which often goes hand in hand with a low toughness and a low tear resistance. To improve the toughness and tear resistance of such construction materials, impact modifiers are usually added. These generally are elastomeric polymers, and good dispersion of these polymers in the polymeric construction material is important. To obtain a good dispersion, the two polymers may on the one hand essentially be incompatible, in this application also called immiscible, but on the other hand incompatible polymer components in principle get in the way of the formation of a fine dispersion.

To achieve a good dispersion of an elastomeric polymer in, for instance, a semi-crystalline polymeric construction material when using two (or more) incompatible polymers, polymers of the type used as construction material can be modified to give them such a functionality as to enable them to react with the elastomeric polymer.

This principle is used, for instance, in EP-A-0 202 214 and in EP-A-0 402 528, which describe polymer compositions of a polyamide, an acrylonitrile-butadiene-styrene graft polymer (ABS) and a terpolymer, obtained by polymerization of styrene, acrylonitrile and maleic anhydride. Polyamide polymers and polymers of the ABS type are immiscible and therefore form two separate phases upon mixing. The poor miscibility leads to a polymer composition with relatively poor mechanical properties. The terpolymer acts as compatibilizer between the polyamide and the ABS polymer, and its use in the composition leads to an improved dispersion and impact resistance.

US 5,436,397 describes compositions on the basis of syndiotactic polystyrene (sPS) and an elastomeric component, as compatibilizer a functionalized syndiotactic polystyrene being incorporated which is capable of reaction with the elastomeric component. As examples of functionalized syndiotactic polystyrenes mention is made of: copolymers of styrene-p-methylstyrene or styrene-divinylbenzene, sPS with terminal glycidyl methacrylate, sPS modified with maleic anhydride or styrene-divinylbenzene copolymers onto which glycidyl methacrylate or maleic anhydride is grafted by means of radical initiators.

A major drawback of the polymer compositions and processes for their preparation as described above is that for each combination of polymers a custom-made copolymer is to be prepared as compatibilizer. In view of the small amounts in which these polymeric compatibilizers are needed, this is hardly ever commercially attractive.

US 4,507,442 further describes a process for the preparation of copolymers of diprimary dialcohol polyesters, such as polyethylene terephthalate and bisphenol A polycarbonates, which polymers as such are incompatible, by heating the polymer mixture for 30-60 minutes to a temperature of 260 ± 20°C with stirring at a pressure of less than 1 mm Hg. The nature of the reactive groups, however, entails that a "living" system is obtained in which the reaction continues. A drawback of the process described in US 4,507,442 is that it takes relatively much time.

The object of the invention is to provide a polymer composition containing two or more essentially incompatible polymers, which contain functional hydroxy groups or functional amino groups, as well as a compatibilizer, the compatibilizer essentially being universally applicable.

Another object of the invention is to provide a process in which the above-mentioned problem is solved by providing an essentially universal compatibilizer for the preparation of a dispersion of two or more essentially incompatible polymers, which contain functional hydroxy groups or functional amino groups.

Surprisingly, it has now been found that these objects can be achieved in that the compatibilizer is carbonyl bislactam (CBL) and the polymer composition contains at least two phases. The invention therefore relates to a polymer composition where two or more essentially incompatible polymers are in contact with each other in the presence of at least one compatibilizer, characterized in that the polymer composition contains at least two phases and in that this compatibilizer is carbonyl bislactam (CBL) of the following formula (I): 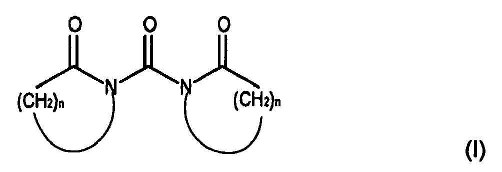 where n is an integer from 3 to 15 and the molar ratio between the number of functional -OH or -NH₂ groups and the CBL lies between 500:1 and 10:1.

US2001/0016630 describes a process for preparing a polyester or polyamide or polyester-amide block copolymer by reacting a polyester and/or polyamide with a carbonyl bislactam (CBL) of the following formula (I) wherein n is an integer from 3 to 15. However, US2001/0016630 does not describe a polymer composition as according to the present invention.

It is noted that anywhere further herein reference is made to the carbonyl bislactam (CBL) of formula (I), it is implied that the number n in formula (I) is an integer from 3 to 15 and that the said carbonyl bislactam (CBL) is used in such amount that the molar ratio between the number of functional -OH or -NH2 groups and the CBL lies between 500:1 and 10:1.

Preferably the polymer composition comprises two or more essentially incompatible polymers, these polymers all containing functional hydroxy groups and/or functional amino groups.

Preferably carbonyl biscaprolactam is used as compatibilizer. This is a compound according to formula I, where n = 5.

The term "compatibilizer", as used here, is understood to mean a chemical compound or composition that is capable of keeping two or more polymers in close and permanent association for an indefinite period of time.

The term "polymers with functional hydroxy groups", as used here, is understood to mean polymers that have at least a functional -OH group; preferably the average number of functional -OH groups is 0.05 to 2 per polymer chain; more preferably the average number of functional -OH groups is 0.2 to 2 per polymer chain. An average number of functional -OH groups that is smaller than 1 occurs in those cases where not all chains in a polymer contain an -OH group. This is for instance the case in a polymer mixture of a polymer with functional -OH groups and another polymer without functional -OH groups.

The term "polymers with functional amino groups", as used here, is understood to mean polymers that have at least a functional -NH₂ group; preferably the average number of functional -NH₂ groups is 0.05 to 2 per polymer chain; more preferably the average number of functional -NH₂ groups is 0.2 to 2 per polymer chain. An average number of functional -NH₂ groups that is smaller than 1 occurs in those cases where not all chains in a polymer contain an -NH₂ group. This is for instance the case in a polymer mixture of a polymer with functional -NH₂ groups and another polymer without functional -NH₂ groups.

The term "incompatible polymers", as used here, is understood to mean polymers that cannot be homogeneously mixed, it being possible to demonstrate, using techniques known to one skilled in the art, that a mixture of such polymers consists of two or more phases.

The term "essentially incompatible polymers that are in contact with each other", as used here, is understood to mean at least two essentially incompatible polymers, with a clear boundary face being present between these polymers. A clear boundary face between essentially incompatible polymers is present in a situation, hereafter referred to as a dispersion, in which particles of a first phase, called disperse phase, are dispersed in a second phase, called continuous phase, but also a situation in which a first and a second polymer are in contact with each other via a macroscopic boundary face, such as for instance in a multilayer laminate.

A special embodiment of the present invention therefore relates to a polymer composition in which two or more essentially incompatible polymers that each contain functional hydroxy groups or functional amino groups are dispersed with each other in the presence of at least one compatibilizer, characterized in that this compatibilizer is carbonyl bislactam (CBL) according to formula (I). The term "polymers that are dispersed with each other", as used here, is understood to mean a two-phase system in which particles of a first phase are dispersed in a second phase. In this case, therefore, this does not concern a single-phase system, in which a first phase is completely mixed with a second phase, or in which said single phase is a block copolymer.

It has been found that the carbonyl bislactam defined above can generally be applied as a universal compatibilizer in a variety of polymer compositions with functional hydroxy or amino groups, often exhibiting surprising properties. Thus, for instance, contrary to when isocyanates or epoxides are used, no side reactions such as gelling or crosslinking occur.

Depending on the conditions under which the process according to the invention is carried out, it is for instance possible to obtain a particle size of the disperse phase of the polymer composition of less than about 10 µm, preferably less than about 3 µm, more preferably less than about 2 µm and most preferably about 0.1-2 µm. The best results are achieved with a particle size of the disperse phase of about 0.3 -2 µm. This ensures that a good dispersion can be obtained using the originally immiscible polymers, without a custom-made compatibilizer having to be prepared. In addition, the universal compatibilizer according to the invention has the advantage that it is low-molecular, so that only a small amount by weight of it needs to be added.

According to a preferred embodiment of the invention a polymer composition is prepared that comprises at least a semi-crystalline or a glassified amorphous polymer (A) and an elastomeric polymer (B), A being present in an amount by weight of 5 to 95% and B in an amount by weight of 95 to 5%, and A and B containing amino and/or hydroxy groups, or polymer A and/or polymer B containing components that contain amino and/or hydroxy groups.

In practice, different types of dispersions of polymer compositions of two or more polymer components can usually be distinguished. Two main forms can be characterized as follows. In the first case the continuous phase substantially comprises semi-crystalline or a glassified amorphous polymer, while an elastomeric polymer is added to enhance the impact resistance and the tear resistance. In the second case the continuous phase substantially comprises an elastomeric polymer, while a semi-crystalline or a glassified amorphous polymer is added to improve the stiffness and/or the compression strength (VICAT). An example of the latter case is a thermoplastic polyester to which a polyamide has been added to increase the compression strength. However, the present invention is by no means limited to combinations of amorphous and semi-crystalline polymers, combinations of crystalline polymers for instance also being possible, as well as combinations of amorphous polymers.

The use of a carbonyl bislactam, preferably carbonyl biscaprolactam, as compatibilizer as defined above generally leads to a better dispersion of the polymer compositions. This is expressed in polymer compositions with improved properties, such as an improved impact resistance or an improved VICAT, depending on the specific composition of the polymer dispersion, compared with a similar state of the art composition.

The amounts of or the ratio between the polymers in the polymer composition are not necessarily critical and are determined in particular by the demands of the application. In a polymer composition with a disperse phase usually a few per cents up to several tens of per cents of the polymer will be chosen that needs to be present as the disperse phase. In a polymer composition consisting of, for instance, a two-layer laminate, the ratio of the first polymer in the first layer to the second polymer in the second layer may even be 50%: 50%. In yet another situation it may be possible to use only a small amount of a second polymer, if this gives adequate adhesion or interaction for said application. It is for instance possible to add a small amount of a polymer with functional hydroxyl or amino groups to a polymer without functional hydroxyl or amino groups so as to functionalize the polymer without functional hydroxyl or amino groups and thus create the possibility of (improvement of) adhesion, or the situation, to be discussed later, in which a polymer is present on a substrate, for instance a glass fibre. In this case, too, only a small amount of polymer with functional hydroxyl or amino groups is needed to cover the surface area of the substrate in such a way as to achieve adequate adhesion or interaction with another polymer with functional hydroxyl or amino groups

The amount of CBL to be added is not very critical and depends mainly on the desired degree of dispersion of the polymer to be dispersed, provided the molar ratio between the number of available functional -OH or -NH₂ groups of the polymers to be dispersed and the CBL lies between 500:1 and 10:1. One skilled in the art can readily determine, through experimentation, the desired ratio, usually depending on the specific polymers used, the CBL to be used and the relevant application. As a general rule, at a ratio in excess of 500:1 usually a too low degree of dispersion is achieved. At a ratio below 10:1 a situation may arise in which the miscibility of the two polymers becomes so high that a dispersion is hardly formed, usually mainly a block copolymer being formed. This will occur particularly at long residence times during preparation of the dispersion. The maximum residence at a given amount of the compound according to formula (I) at which a dispersion is still present can readily be determined by means of routine experiments by one skilled in the art. In some case one skilled in the art will want to choose an amount of the compound according to formula (I) that is higher than that needed for the preparation of a dispersion or he will want to achieve a situation in which not yet all of the amount of the compound according to formula (I) has reacted. This can be controlled via the residence time, a shorter residence time giving a higher amount of compound according to formula I that has not reacted or has reacted only unilaterally. Such a situation with a so-called surplus of the compound according to formula (I) may be desirable if the polymer composition obtained should exhibit residual activity, for instance if the polymer composition is still to be applied as an adhesive layer between layers of essentially incompatible polymers in a multilayer laminate. The surplus of the compound according to formula (I) in the polymer composition can then be used to improve good adhesion between the layers of essentially incompatible polymers in a multilayer laminate.

According to the process of the present invention two or more essentially incompatible polymers are mixed with a carbonyl bislactam compound according to formula (I), said polymers each possessing functional hydroxy groups and/or functional amino groups. Preferably the polymers all have either functional hydroxy groups or functional amino groups. In that case, therefore, the polymers are either hydroxy functional, or amino functional. However, it is also possible for the continuous phase to substantially comprise a polymer with functional hydroxy groups, which is contacted with the compatibilizer according to the invention, after which a polymer with functional amino groups is added as disperse phase.

Optionally the polymers may also contain other functional groups, such as for instance -COOH. The CBL, however, reacts exclusively with the -NH₂ and -OH functional groups; functional polymers that also possess -COOH functionality react with the -OH functional groups or the -NH₂ functional groups.

The composition according to the invention can be prepared in a simple manner using the customary techniques and equipment and this preparation will therefore not present any problems to one skilled in the art. The preparation may for instance take place by mixing and melting the starting polymers in customary melt-mixing equipment, for instance a Haake kneader, a Brabender mixer, a single-screw or twin-screw extruder or a static mixer, and incrementally adding the desired amount of CBL during mixing (reactive extrusion). It is also possible for all components to be combined in a single operation and to be premixed in solid condition before being melted and mixed or being contacted with each other. The preparation temperature is not very critical and will generally vary from about 100°C to about 350°C. The preparation can be carried out both continuously and batchwise. A further advantage of the process according to the invention is that it generally takes only 1 to 10 minutes.

If desired the preparation can be carried out with the aid of a suitable catalyst. Suitable catalysts may be acids as well as bases. For an overview of such catalysts, see WO-A-01/66609, the contents of which are considered to be incorporated herein.

Suitable polymers with functional hydroxy groups that can be used in the process according to the invention for instance include polyesters, such as polyethylene terephthalate (PET), polybutylene terephthalate (PBT) and polycaprolacton; polyethers, such as polytetrahydrofuran, polyethylene glycol, polypropylene glycol; hydroxy-functional polybutadiene; polydimethyl siloxane and poly(meth)acrylates that contain hydroxyethyl(meth)acrylate; polyvinylalcohol; cellulose.

Suitable polymers with functional amino groups that can be used in the process according to the invention for instance include aliphatic polyamides, such as polyamide-4, polyamide-6, polyamide-8, polyamide-4,6, polyamide-6,6, polyamide-6,10, polyamides derived from an aliphatic diamine and an aromatic dicarboxylic acid, for instance polyamide-4,T, polyamide-6,T, polyamide-4,I, where T represents terephthalate and I represents isophthalate, copolyamides of linear polyamides and copolyamides of an aliphatic and a partially aromatic polyamide, for instance polyamide-6/6,T and polyamide-6/6,I; amino-terminated polyethers, such as amino-functional polytetrahydrofuran, amino-functional polyethylene glycol, amino-functional polypropylene glycol, amino-functional polybutadiene, amino-functional butadiene and amino-functional acrylonitrile.

It has further been found that it is not only possible with the present invention to obtain a polymer composition comprising a stable dispersion of two essentially incompatible polymers, but that it generally becomes possible to improve the adhesion or the interaction between two essentially incompatible polymers. This type of adhesion is for instance found in shaped parts containing several phases that are in contact with each other, which shaped parts are built up of different polymers. In the present application, several phases are also understood to be several parts.

Another situation in which a universal compatibilizer plays a role is that in which, for instance, fillers and/or reinforcing agents are coated or subjected to a so-called sizing operation in order to improve the distribution of this type of substances in a polymer matrix. Coating or sizing of this type of inorganic substrates usually involves the application of silane and/or titanate compounds as well as polymers including polyacrylates and/or polyurethanes to the surface of this substrate. When fillers and/or reinforcing agents that have been coated/sized are incorporated into a polymer matrix so that a compound is obtained, the better distribution results in better properties of the compound than would have been achieved if it contained fillers and/or reinforcing agents that had not been coated/sized. An added advantage in the cases in which the substrate contains a polymer with functional hydroxy groups and/or functional amino groups is that the present invention also makes it possible to improve the adhesion between the polymer matrix with functional hydroxy groups and/or functional amino groups and the polymer with functional hydroxy groups and/or functional amino groups on the substrate. This results in better adhesion between the polymer matrix and the substrate: the fillers and/or reinforcing agents. This better adhesion will be reflected not only in higher mechanical properties, but also in better retention of mechanical properties under wet conditions, a better so-called hydrolytical stability.

Fillers and/or reinforcing agents are understood to be the fillers and/or reinforcing agents customarily used in the polymer industry, for instance kaolin, talc, mica and glass spheres, fibres and flakes. Preferably the CBL is added to the sizing that is added to the substrate. As a result, less CBL will be needed to achieve good adhesion

The present invention thus not only makes it possible to improve the interaction at micro scale, so that a stable dispersion is obtained, as already described, but the adhesion or the interaction between two essentially incompatible polymers can also be improved at macro scale. Micro scale is understood to mean that the contact area between the two essentially incompatible polymers is divided in a large number of surface areas of the order of magnitude of 1 mm² or less, whereas this contact area is substantially larger at macro scale. The contact area is the area where a separate part of the one polymer is in contact with the other part. At micro scale this contact area is for instance formed by the surface area of a disperse particle or a glass fibre that is provided with a polymer with functional hydroxy groups and/or functional amino groups. At macro scale this contact area is for instance formed by the surface area at which two layers in a laminate are in contact with each other. An example of macro scale adhesion or interaction between two polymers is in a shaped part consisting of at least two parts that are in contact with each other, each of the parts having been prepared from a different polymer with terminal amino and/or hydroxy groups.

An example of such a shaped part is a laminate obtained by coextrusion of two or more polymers in at least two layers. This may take the form of a multilayer film or sheet, in which each layer may for instance impart specific properties. Other examples are fibre, tube or profile extrusion of two polymers, in which for instance a hard and a soft polymer are extruded. The choice of the polymers used for the respective phases will depend on the application. Use may be made of a combination of a hard and a soft polymer in which the latter can give a soft-touch character, but also of polymers with specific barrier, mechanical or even tribological properties.

To this end for instance a polyester phase may give a high stiffness, particularly under wet conditions, while a polyamide phase may give abrasion resistance. An example of a shaped part is, for instance, a monofilament with a core of polyester, for instance PET, and a sheath of polyamide, for instance polyamide 6. Such monofilaments can be used in various leisure articles, for instance a grass mower or a lawn edge trimmer, but also in industry, for instance in filter cloths for the paper industry or in wear-resistant brushes. Another example of such a shaped part is formed when a polymer part is placed in an injection-moulding mould and is there contacted with a melt of a second polymer, for instance by means of so-called overmoulding or insert moulding. Overmoulding and insert moulding are customary terms in the art for processes in which a polymer part is surrounded by an injected polymer of another type. Polymers can be chosen from the suitable polymers with functional amino and/or hydroxy groups that have already been mentioned. The polymers can be semi-crystalline as well as amorphous.

The invention therefore also relates to shaped parts containing at least two parts that are in contact with each other via a boundary face and in which each of these parts contains a different polymer, these polymers being essentially incompatible polymers and containing functional hydroxy groups and/or functional amino groups and at least one of said polymers having reacted with carbonyl bislactam or containing carbonyl bislactam.

The invention further comprises a process for the preparation of a shaped part, comprising at least a first and a second part, the first and the second part respectively containing a first and a second polymer, with each polymer containing functional hydroxy groups and/or functional amino groups, these parts being in contact with each other via a boundary face, and with at least the first and/or second polymer having reacted with carbonyl bislactam, by contacting a melt of the second polymer with the first polymer, wherein the the carbonyl bislactam (CBL) is of the following formula (I): 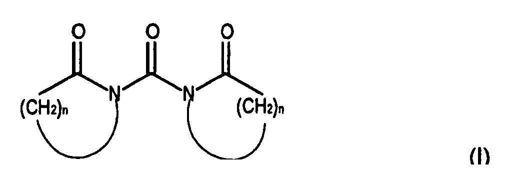 where n is an integer from 3 to 15 and the molar ratio between the number of functional -OH or -NH₂ groups and the CBL lies between 500:1 and 10:1. Preferably the carbonyl bislactam is carbonyl biscaprolactam.

An embodiment of the present invention comprises a process for the preparation of a laminate consisting of at least two layers, containing polymers that are in themselves incompatible and CBL. The adhesion between the layers is better than when a laminate is prepared from two essentially incompatible polymers. This type of laminates is usually prepared via coextrusion. The choice of polymers from which the laminate is built up is determined also, apart from said terminal amino and/or hydroxy groups, by the requirements to be met in the application, for instance barrier properties, tribological properties and mechanical properties, respectively.

In an embodiment of this process a polymer is provided with the carbonyl bislactam prior to the coextrusion or during the coextrusion, for instance by mixing the polymer with CBL or by adding CBL to a melt of this polymer, after which the laminate is formed by coextrusion with a second polymer. Formation of the laminate can take place using techniques known to one skilled in the art and requires no further inventive effort. An advantage of this process is that an adhesive layer in between the layers of the laminate, as is customary in the art, is not necessary. In another embodiment of a process according to the invention an intermediate layer is provided as adhesive layer between the separate layers of the laminate during coextrusion of at least two essentially incompatible polymers. The intermediate layer is formed by CBL. CBL can be applied between the polymer layers as a melt, CBL melt at 115°C, or in solution. An example of a suitable solvent is acetone.

Another embodiment is the one in which use is made of an intermediate layer in the form of a polymer composition comprising at least the first and/or the second polymer and further CBL. This intermediate layer, based on the polymer composition, will form a bond with the two polymers in the separate layers of the laminate and will have virtually no effect on the properties of the laminate, this intermediate layer not being based on "foreign" material. Herein resides a major advantage compared with the adhesive layers commonly applied in the art, which are usually based on polyolefins. In those cases the high-temperature mechanical properties or the barrier properties will usually be adversely affected.

A further process according to the invention comprises overmoulding or insert moulding. This involves placing a shaped part prepared from a suitable first polymer in a mould and surrounding it with a second polymer that is injected into the mould, with either the first and/or the second polymer containing carbonyl bislactam. Preferably the first polymer, which is surrounded by the injected second polymer, contains carbonyl bislactam. Even more preferably the second polymer contains -NH₂ groups. This gives a faster reaction of the CBL, as present in the first polymer, with the second polymer.

In a process according to the macroscopic embodiment, too, the amount of CBL to be added is not very critical, depending primarily on the degree of adhesion or bond strength to be realized between the two polymers. As a rule the amount of CBL that is chosen will not be too high, for instance not higher than the amount of terminal amino and/or hydroxy groups in both polymers together. One skilled in the art can simply determine the desired amount of CBL through routine experiments, for instance by mean of peel tests that can be used to determine the adhesion between the layers or the parts.

The preparation of the carbonyl bislactam to be used, for instance by reaction of the lactam in question with phosgene, is described in the literature. See for instance JP-A-42017832. Carbonyl biscaprolactam is commercially available from DSM at Geleen, the Netherlands.

In the polymer compositions according to the invention also additives may be present, such as stabilizers, lubricants, colourants and fillers or reinforcing agents, such as glass fibres and minerals. A suitable choice of these agents is entirely within the capabilities of one skilled in the art and does not require any inventive effort.

It will be clear that various variants and modifications of the present invention and the embodiments described are possible, which are within the capabilities of one skilled in the art on the basis of the present description and his professional knowledge. Such variants are all within the scope of this invention, which is defined by the following claims.

## Claims

1. Polymer composition, wherein two or more essentially incompatible polymers, each containing functional hydroxy groups or functional amino groups, are in contact with each other in the presence of at least one compatibilizer, **characterized in that** the polymer composition comprises at least two phases and **in that** the compatibilizer is carbonyl bislactam (CBL) of the following formula (I): 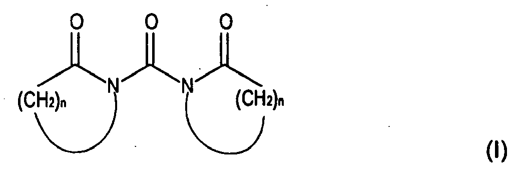 where n is an integer from 3 to 15, and the molar ratio between the number of functional -OH or -NH₂ groups and the CBL lies between 500:1 and 10:1.

2. Polymer composition according to claim 1, **characterized in that** the two or more essentially incompatible polymers all contain either functional hydroxy groups or functional amino groups.

3. Polymer composition according to claim 1 or claim 2, **characterized in that** the compatibilizer is carbonyl biscaprolactam.

4. Polymer composition according to any one of claims 1 to 3, **characterized in that** the composition contains a semi-crystalline polymer and/or a glassified amorphous polymer (A) and an elastomeric polymer (B), A being present in an amount by weight of 5 to 95% and B in an amount by weight of 95 to 5%.

5. Polymer composition according to claim 4, **characterized in that** the composition is an impact resistant polymer composition.

6. Process for the preparation of a polymer composition that contains at least two phases by contacting two or more polymers, each containing functional hydroxy groups and/or functional amino groups, with a compatibilizer, **characterized in that** the compatibilizer is carbonyl bislactam of the following formula (I): 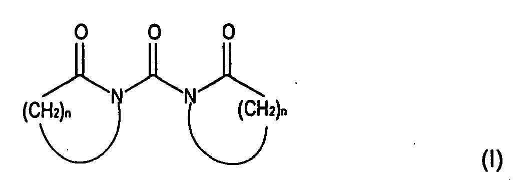 where n is an integer from 3 to 15, the molar ratio between the number of functional -OH or -NH₂ groups and the carbonyl bislactam lies between 500:1 and 10:1.

7. Process according to claim 6, **characterized in that** the compatibilizer is carbonyl biscaprolactam.

8. Shaped parts containing at least two parts that are in contact with each other via a boundary face, each of these parts containing a different polymer, these polymers being essentially incompatible polymers and containing functional hydroxy groups and/or functional amino groups and at least one of said polymers having reacted with carbonyl bislactam,
wherein the carbonyl bislactam (CBL) is of the following formula (I): 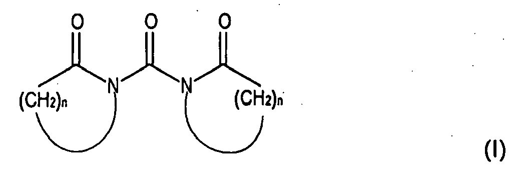 where n is an integer from 3 to 15, and the molar ratio between the number of functional -OH or -NH₂ groups and the CBL lies between 500:1 and 10:1.

9. Process for the preparation of a shaped part, comprising at least a first and a second part, the first and second part being based on, respectively, a first and a second polymer, with each polymer containing functional hydroxy groups and/or functional amino groups, these parts being in contact with each other via a boundary face and with at least the first and/or the second polymer having reacted with carbonyl bislactam, by contacting a melt of the second polymer with the first polymer,
wherein the carbonyl bislactam (CBL) is of the following formula (I): 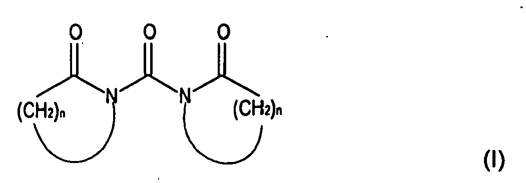 where n is an integer from 3 to 15, and the molar ratio between the number of functional -OH or -NH₂ groups and the CBL lies between 500:1 and 10:1.

10. Process for the preparation of a shaped part according to claim 9, the carbonyl bislactam being carbonyl biscaprolactam.

11. Process for the preparation of a shaped part according to either of claims 9-10, the shaped part being a multilayer laminate.

12. Process according to either of claims 9-10, the shaped part being formed via overmoulding or insert moulding.

13. Process for the preparation of a multilayer laminate containing an adhesive layer, **characterized in that** the adhesive layer contains CBL or a polymer with functional hydroxy groups and/or functional amino groups that has reacted with carbonyl bislactam,
wherein the carbonyl bislactam (CBL) is of the following formula (I): 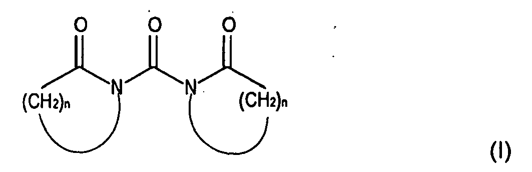 where n is an integer from 3 to 15, and the molar ratio between the number of functional -OH or -NH₂ groups and the CBL lies between 500:1 and 10:1.

14. Use of CBL during coextrusion of two or more essentially incompatible polymers that contain functional hydroxy and/or amino groups, wherein the carbonyl bislactam (CBL) is of the following formula (I): 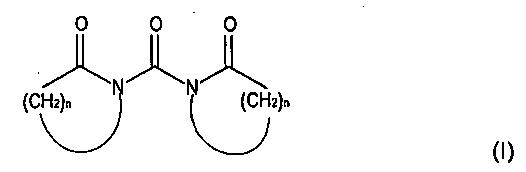 where n is an integer from 3 to 15, and the molar ratio between the number of functional -OH or -NH₂ groups and the CBL lies between 500:1 and 10:1.

## Patentansprüche

1. Polymerzusammensetzung, in der zwei oder mehr im wesentlichen unverträgliche Polymere, die jeweils funktionelle Hydroxygruppen oder funktionelle Aminogruppen enthalten, in Gegenwart mindestens eines Verträglichkeitsvermittlers miteinander in Berührung stehen, **dadurch gekennzeichnet, daß** die Polymerzusammensetzung mindestens zwei Phasen aufweist und es sich bei dem Verträglichkeitsvermittler um Carbonylbislactam (CBL) der folgenden Formel (I) handelt: 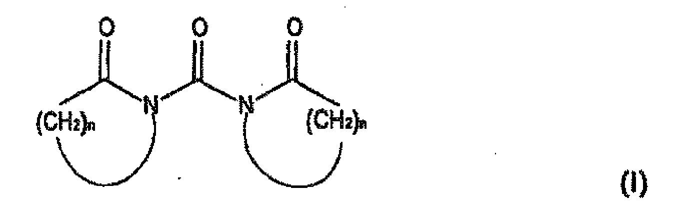 wobei n für eine ganze Zahl von 3 bis 15 steht, und das Molverhältnis zwischen der Zahl funktioneller -OH- oder -NH₂-Gruppen und dem CBL zwischen 500:1 und 10:1 liegt.

2. Polymerzusammensetzung nach Anspruch 1, **dadurch gekennzeichnet, daß** die zwei oder mehr im wesentlichen unverträglichen Polymere alle entweder funktionelle Hydroxygruppen oder funktionelle Aminogruppen enthalten.

3. Polymerzusammensetzung nach Anspruch 1 oder Anspruch 2, **dadurch gekennzeichnet, daß** es sich bei dem Verträglichkeitsvermittler um Carbonylbiscaprolactam handelt.

4. Polymerzusammensetzung nach einem der Ansprüche 1 bis 3, **dadurch gekennzeichnet, daß** die Zusammensetzung ein teilkristallines Polymer und/oder ein verglastes amorphes Polymer (A) und ein elastomeres Polymer (B) enthält, wobei A in einer Menge von 5 bis 95 Gew.-% und B in einer Menge von 95 bis 5 Gew.-% vorliegt.

5. Polymerzusammensetzung nach Anspruch 4, **dadurch gekennzeichnet, daß** es sich bei der Zusammensetzung um eine schlagzähe Polymerzusammensetzung handelt.

6. Verfahren zur Herstellung einer Polymerzusammensetzung, die mindestens zwei Phasen enthält, bei dem man zwei oder mehr Polymere, die jeweils funktionelle Hydroxygruppen und/oder funktionelle Aminogruppen enthalten, mit einem Verträglichkeitsvermittler in Berührung bringt, **dadurch gekennzeichnet, daß** es sich bei dem Verträglichkeitsvermittler um Carbonylbislactam (CBL) der folgenden Formel (I) handelt: 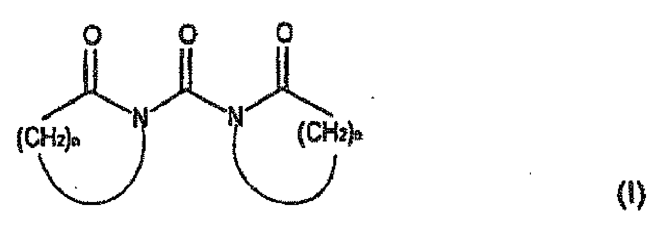 wobei n für eine ganze Zahl von 3 bis 15 steht, wobei das Molverhältnis zwischen der Zahl funktioneller -OH- oder -NH₂-Gruppen und dem Carbonylbislactam zwischen 500:1 und 10:1 liegt.

7. Verfahren nach Anspruch 6, **dadurch gekennzeichnet, daß** es sich bei dem Verträglichkeitsvermittler um Carbonylbiscaprolactam handelt.

8. Formteile, enthaltend mindestens zwei Teile, die über eine Grenzfläche miteinander in Berührung stehen, wobei jeder dieser Teile ein anderes Polymer enthält, wobei es sich bei diesen Polymeren um im wesentlichen unverträgliche Polymere mit funktionellen Hydroxygruppen und/oder funktionellen Aminogruppen handelt und mindestens eines der Polymere mit Carbonylbislactam reagiert hat,
wobei das Carbonylbislactam (CBL) die folgende Formel (I) aufweist: 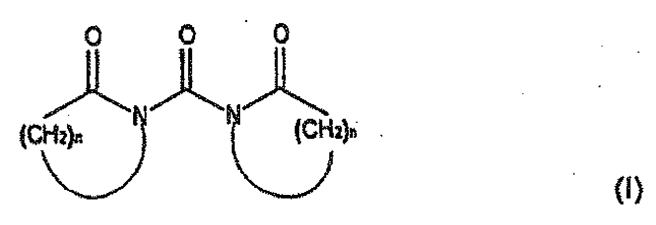 wobei n für eine ganze Zahl von 3 bis 15 steht, und das Molverhältnis zwischen der Zahl funktioneller -OH- oder -NH₂-Gruppen und dem CBL zwischen 500:1 und 10:1 liegt.

9. Verfahren zur Herstellung eines Formteils mit mindestens einem ersten und einem zweiten Teil, wobei der erste Teil und der zweite Teil auf einem ersten bzw. einem zweiten Polymer basieren, wobei jedes Polymer funktionelle Hydroxygruppen und/oder funktionelle Aminogruppen enthält, wobei diese Teile über eine Grenzfläche miteinander in Berührung stehen und mindestens das erste und/oder das zweite Polymer mit Carbonylbislactam reagiert hat, durch Inberührungbringen einer Schmelze des zweiten Polymers mit dem ersten Polymer,
wobei das Carbonylbislactam (CBL) die folgende Formel (I) aufweist: 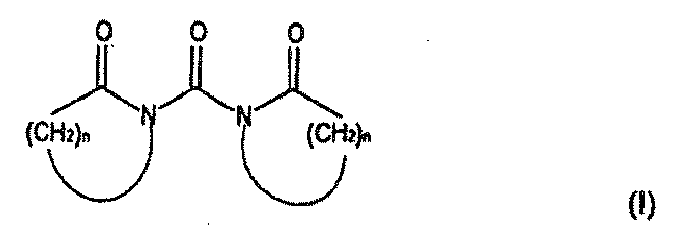 wobei n für eine ganze Zahl von 3 bis 15 steht, und das Molverhältnis zwischen der Zahl funktioneller -OH- oder -NH₂-Gruppen und dem CBL zwischen 500:1 und 10:1 liegt.

10. Verfahren zur Herstellung eines Formteils nach Anspruch 9, wobei es sich bei dem Carbonylbislactam um Carbonylbiscaprolactam handelt.

11. Verfahren zur Herstellung eines Formteils nach einem der Ansprüche 9-10, wobei es sich bei dem Formteil um ein Mehrschichtlaminat handelt.

12. Verfahren nach einem der Ansprüche 9-10, wobei das Formteil durch Overmoulding oder Insert-Moulding geformt wird.

13. Verfahren zur Herstellung eines Mehrschichtlaminats mit einer Klebstoffschicht, **dadurch gekennzeichnet, daß** die Klebstoffschicht CBL oder ein Polymer mit funktionellen Hydroxygruppen und/oder funktionellen Aminogruppen, das mit Carbonylbislactam reagiert hat, enthält,
wobei das Carbonylbislactam (CBL) die folgende Formel (I) aufweist: 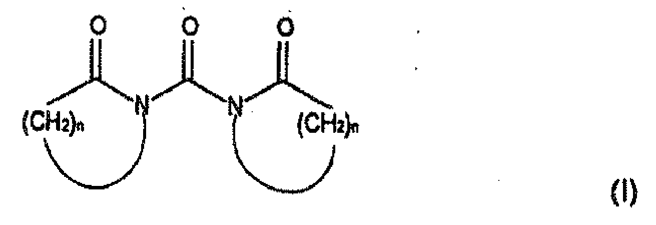 wobei n für eine ganze Zahl von 3 bis 15 steht, und das Molverhältnis zwischen der Zahl funktioneller -OH- oder -NH₂-Gruppen und dem CBL zwischen 500:1 und 10:1 liegt.

14. Verwendung von CBL bei der Coextrusion von zwei oder mehr im wesentlichen unverträglichen Polymeren, die funktionelle Hydroxy- und/oder Aminogruppen enthalten,
wobei das Carbonylbislactam (CBL) die folgende Formel (I) aufweist: 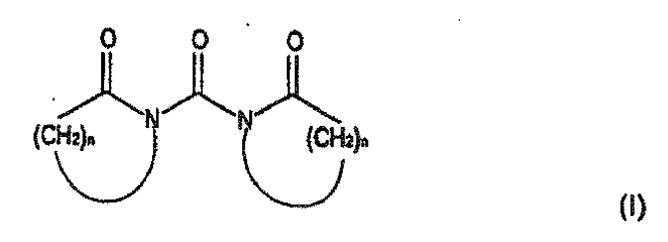 wobei n für eine ganze Zahl von 3 bis 15 steht, und das Molverhältnis zwischen der Zahl funktioneller -OH- oder -NH₂-Gruppen und dem CBL zwischen 500:1 und 10:1 liegt.

## Revendications

1. Composition de polymères, dans laquelle deux, ou plus, polymères essentiellement incompatibles, chacun contenant des groupements hydroxy fonctionnels ou des groupements amino fonctionnels, sont en contact l'un avec l'autre en présence d'au moins un compatibilisateur, **caractérisée en ce que** la composition de polymères comprend au moins deux phases et **en ce que** le compatibilisateur est le carbonyle bislactame (CBL) de formule (I) suivante : 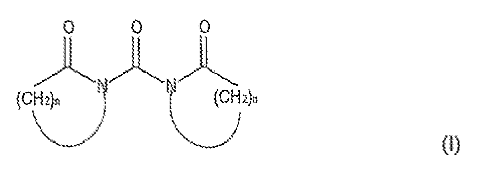 dans laquelle n est un nombre entier allant de 3 à 15, et le rapport molaire du nombre de groupements -OH ou - NH₂ fonctionnels au CBL se trouve entre 500:1 et 10:1.

2. Composition de polymères selon la revendication 1, **caractérisée en ce que** les deux, ou plus, polymères essentiellement incompatibles, contiennent tous soit des groupements hydroxy fonctionnels, soit des groupements amino fonctionnels.

3. Composition de polymères selon la revendication 1 ou la revendication 2, **caractérisée en ce que** le compatibilisateur est le carbonyle biscaprolactame.

4. Composition de polymères selon l'une quelconque des revendications 1 à 3, **caractérisée en ce que** la composition contient un polymère semi-cristallin et/ou un polymère amorphe vitrifié (A) et un polymère élastomère (B), A étant présent selon une quantité en poids allant de 5 à 95% et B selon une quantité en poids allant de 95 à 5%.

5. Composition de polymères selon la revendication 4, **caractérisée en ce que** la composition est une composition de polymères résistante au choc.

6. Procédé de préparation d'une composition de polymères qui contient au moins deux phases, par la mise en contact de deux, ou plus, polymères, chacun contenant des groupements hydroxy fonctionnels et/ou des groupements amino fonctionnels, avec un compatibilisateur, **caractérisé en ce que** le compatibilisateur est le carbonyle bislactame de formule (I) suivante : 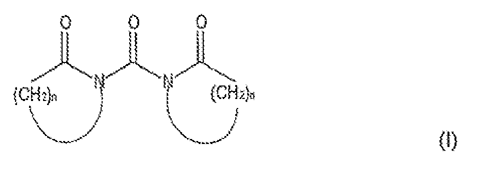 dans laquelle n est un nombre entier allant de 3 à 15, et le rapport molaire du nombre de groupements -OH ou - NH₂ fonctionnels au carbonyle bislactame se trouve entre 500:1 et 10:1.

7. Procédé selon la revendication 6, **caractérisé en ce que** le compatibilisateur est le carbonyle biscaprolactame.

8. Pièces mises en forme contenant au moins deux parties qui sont en contact l'une avec l'autre par l'intermédiaire d'une face de séparation, chacune de ces parties contenant un polymère différent, ces polymères étant des polymères essentiellement incompatibles et contenant des groupements hydroxy fonctionnels et/ou des groupements amino fonctionnels, et au moins l'un desdits polymères ayant réagi avec le carbonyle bislactame,
où le carbonyle bislactame (CBL) répond à la formule (I) suivante : 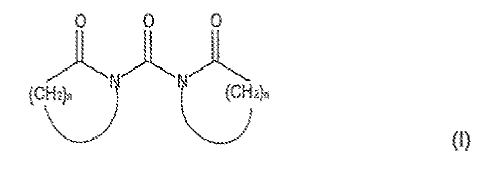 dans laquelle n est un nombre entier allant de 3 à 15, et le rapport molaire du nombre de groupements -OH ou - NH₂ fonctionnels au CBL se trouve entre 500:1 et 10:1.

9. Procédé de préparation d'une pièce mise en forme, comprenant au moins une première et une deuxième partie, la première et la deuxième partie étant basées sur, respectivement, un premier et un deuxième polymère, chaque polymère contenant des groupements hydroxy fonctionnels et/ou des groupements amino fonctionnels, ces parties étant en contact l'une avec l'autre par l'intermédiaire d'une face de séparation, au moins le premier et/ou le deuxième polymères ayant réagi avec le carbonyle bislactame, par la mise en contact d'une masse fondue du deuxième polymère avec le premier polymère,
où le carbonyle bislactame (CBL) répond à la formule (I) suivante : 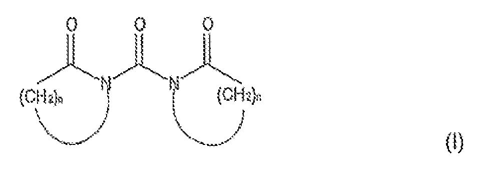 dans laquelle n est un nombre entier allant de 3 à 15, et le rapport molaire du nombre de groupements -OH ou - NH₂ fonctionnels au CBL se trouve entre 500:1 et 10:1.

10. Procédé de préparation d'une pièce mise en forme selon la revendication 9, le carbonyle bislactame étant le carbonyle biscaprolactame.

11. Procédé de préparation d'une pièce mise en forme selon l'une ou l'autre parmi les revendications 9-10, la pièce mise en forme étant un stratifié multicouches.

12. Procédé selon l'une ou l'autre parmi les revendications 9-10, la pièce mise en forme étant façonnée par surmoulage ou moulage par insert.

13. Procédé de préparation d'un stratifié multicouches contenant une couche adhésive, **caractérisé en ce que** la couche adhésive contient du CBL ou un polymère contenant des groupements hydroxy fonctionnels et/ou des groupements amino fonctionnels ayant réagi avec le carbonyle bislactame,
où le carbonyle bislactame (CBL) répond à la formule (I) suivante : 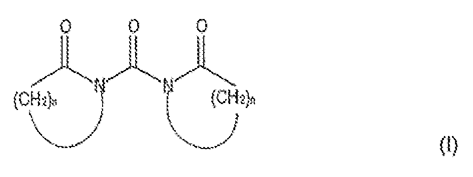 dans laquelle n est un nombre entier allant de 3 à 15, et le rapport molaire du nombre de groupements -OH ou - NH₂ fonctionnels au CBL se trouve entre 500:1 et 10:1.

14. Utilisation de CBL pendant la coextrusion de deux, ou plus, polymères essentiellement incompatibles et contenant des groupements hydroxy et/ou amino fonctionnels,
où le carbonyle bislactame (CBL) répond à la formule (I) suivante : 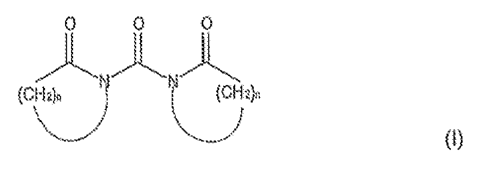 dans laquelle n est un nombre entier allant de 3 à 15, et le rapport molaire du nombre de groupements -OH ou - NH₂ fonctionnels au CBL se trouve entre 500:1 et 10:1.
